# EUROPÄISCHE PATENTSCHRIFT

(11) **EP 0 406 782 B1**
(45) Veröffentlichungstag und Bekanntmachung des Hinweises auf die Patenterteilung: **15.09.1993**
(21) Anmeldenummer: 90112628.4
(22) Anmeldetag: 03.07.1990
(51) Int. Cl.: B23Q 3/15, G01B 21/04

(54) **Elektromagnetische Haltevorrichtung**
Electromagnetic holding device
Dispositif de retenue électro-magnétique

(30) Priorität: 07.07.1989 DE 3922297
(43) Veröffentlichungstag der Anmeldung: 09.01.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Enderle, Eckhard, D-7080 Aalen-Dewangen (DE); Wirth, Michael, D-7080 Aalen (DE); Baier, Bernd, D-7080 Aalen (DE)

(56) Entgegenhaltungen:
- DE-A- 2 346 042
- DE-A- 2 544 465
- US-A- 4 649 623
- SOVIET INVENTIONS ILLUSTRATED, P Sektion, Woche 33, 26. September 1984DERWENT PUBLICATIONS LTD., London Seite 56

## Beschreibung

Die Erfindung betrifft eine Haltervorrichtung für Wechselteile, mit einem oder mehreren Permanentmagneten und einem Elektromagneten, dessen Feld dem des Permanentmagneten während des Wechselvorganges überlagerbar ist gemäß dem Oberbegriff des Anspruchs 1, sowie einen Tastkopf für Koordinatenmeßmaschinene gemäß dem Oberbegriff des Anspruchs 7. Derartige Haltevorrichtungen werden beispielsweise für Hebwerkzeuge oder Transporteinrichtungen benutzt, um Werkstücke zu fördern. Es ist außerdem aus der US-PS 46 49 623 bekannt, Meßtaster auswechselbar im Tastkopf von Koordinatenmeßgeräten mit Hilfe einer derartigen Vorrichtung zu halten.

Bei den genannten Vorrichtungen dient der Elektromagnet dazu, das Feld des Permanentmagneten während des Wechselvorganges zu schwächen bzw. zu verstärken, damit das gehaltene Teil leicht abgenommen bzw. selbsttätig an die Wechselfläche angezogen werden kann. In der Zeit zwischen den Wechselvorgängen wird das eingewechselte Teil allein durch die Kraft des Permanentmagneten gehalten.

Die elektromagnetischen Haltevorrichtungen der eingangs genannten Art sind in der Regel wie in dem französischen Patent Nr. 7303835 sowie dem DDR-Patent 127065 beschrieben aufgebaut. Danach ist der Permanentmagnet zentrisch in die Bohrung eines topfartigen Flußführungsteils eingesetzt. Der Elektromagnet ist, bezogen auf die Wechselfläche, vor dem Permanentmagneten mit seinem Eisenkern in das Flußführungsteil eingesetzt. Zwischen dem Permanentmagneten und dem Elektromagneten ist außerdem ein scheibenförmiges Weicheisenteil so eingesetzt, daß zwischen seinen Außenseiten und der Innenseite des topfartigen Flußführungsteils ein kleiner Spalt verbleibt. Dieser Spalt bildet einen Kurzschlußpfad, über den der Fluß des Elektromagneten geführt wird, damit er den Permanentmagneten nicht durchsetzen muß.

Dieser Spalt bildet jedoch einen relativ hohen Widerstand für den Fluß des Elektromagneten. Dessen Spule muß somit wesentlich überdimensioniert werden, damit die zur Neutralisierung des Flusses des Permanentmagneten erforderliche Feldstärke erreicht werden kann. Sie wird daher groß und schwer. Außerdem verbraucht sie eine relativ hohe elektrische Leistung, die in Wärme umgesetzt wird und insbesondere bei der Anwendung in Meßgeräten thermische Probleme mit sich bringt. Schließlich müssen die Flußführungsteile im Bereich des Permanentmagneten mit ausreichendem Abstand verlaufen, damit kein weiterer magnetischer Kurzschluß entsteht. Das umbaute Volumen dieser bekannten elektromagnetischen Haltevorrichtungen ist deshalb relativ groß.

In der JP-A- 60144914 ist eine elektromagnetische Haltevorrichtung beschrieben, die aus einem im Querschnitt E-förmigen Flußführungsteil besteht, in dessen Ringspalt die Spule des Elektromagneten sowie ein Permanentmagnet eingesetzt sind, dessen Pole radial in Bezug auf die Achse des Magnetfeldes der Spule ausgerichtet sind. Der Permanentmagnet ist hier auf der Seite des Flußführungsteils angeordnet, an die das Werkstück angezogen wird.

In dieser Haltevorrichtung ist jedoch der Kern des weichmagnetischen Flußführungsteils durch einen Spalt durchbrochen. Der Spalt dient dazu, den über den Boden des Flußführungsteils hinter dem Elektromagneten verlaufenden Kurzschlußpfad für den Fluß des Permanentmagneten zu unterbrechen, damit das Werkstück allein durch den Permanentmagneten, ohne Erregung des Elektromagneten angezogen werden kann. Der Elektromagnet wird nur dann erregt, wenn das Feld des Permanentmagneten zum Lösen des Werkstücks neutralisiert werden soll.

Der Spalt im Flußführungsteil stellt jedoch auch für den Fluß des Elektromagneten einen hohen magnetischen Widerstand dar. Entsprechend gelten für diese bekannte elektromagnetische Haltevorrichtung die gleichen, eingangs genannten Nachteile, was das Überdimensionieren des Elektromagneten betrifft.

Soll eine elektromagnetische Haltevorrichtung für das Auswechseln des Taststiftes in den auslenkbaren Teil des Tastkopfes eines Koordinatenmeßgerätes eingebaut werden, dann wird jedoch ein möglichst geringes Gewicht und ein möglichst kleines Einbauvolumen gewünscht. Da nämlich das vom Tastkopf zu tragende Gesamtgewicht des Taststiftträgers einschließlich des Taststifts selbst und seiner Haltevorrichtung nach oben beschränkt ist, fehlt das für die Haltevorrichtung verbrauchte Gewicht an den Taststiften, d.h. man ist auf wenige, relativ leichte Taststifte eingeschränkt. Außerdem begrenzt ein hohes Gewicht im auslenkbaren Teil des Tastkopfes die Dynamik des Koordinatenmeßgerätes, d.h. die zulässige Beschleunigung, mit der der Tastkopf verfahren werden kann. Hier muß das Kippmoment, das beim Anfahren bzw. Abbremsen der Maschine am beweglichen Teil des Tastkopfes angreift, so klein gehalten werden, daß dieses nicht aus seinem Lager aushebt und eine Antastung vortäuscht. Bestimmende Größe hierfür ist neben dem Gewicht die Länge des eingewechselten Tasters. Ein hohes Gewicht für die Haltevorrichtung beschränkt deshalb die Länge der einwechselbaren Taster.

Es ist die Aufgabe der vorliegenden Erfindung, eine insbesondere für den Einbau in den Tastkopf eines Koordinatenmeßgerätes geeignete elektromagnetische Haltevorrichtung, sowie einen Tastkopf zu schaffen, die sich ohne Einbuße an die Haltekraft durch ein möglichst geringes Gewicht und eine kleine Baugröße auszeichnen.

Diese Aufgabe wird mit den in Anspruch 1 bzw. Anspruch 7 angegebenen Maßnahmen gelöst.

Mit den erfindungsgemäßen Maßnahmen ist es möglich, das Gewicht und die Baugröße gegenüber den eingangs genannten Stand der Technik mehr als zu halbieren. Denn da der Fluß des Elektromagneten nicht über einen Spalt geführt werden muß sondern bei angesetztem Wechselteil in einem vollständig geschlossenen, weichmagnetischen Flußführungsteil verläuft, kann eine kleinere, leichtere Spule verwendet werden. Sie verbraucht dann außerdem weniger elektrische Energie, so daß die freigesetzte in Koordinatenmeßgeräten äußerst störende Verlustwärme ebenfalls geringer ist.

Als Permanentmagnet kann ein einstückiger, ringförmiger, mit seinen Abmessungen auf den Ringspalt des Flußführungsteils abgestimmter Magnet mit radialer Polarisation seines Magnetfeldes eingesetzt sein. Solche radial polarisierten Ringmagnete sind an sich bekannt. Es ist jedoch auch möglich, mehrere achsial polarisierte Einzelmagnete mit radialer Ausrichtung ihrer Magnetpole bezogen auf die Magnetfeldachse des Elektromagneten bzw. des Flußführungsteils in den Ringspalt einzusetzen. Im Ergebnis läßt sich mit dieser Lösung ein stärkeres permanentmagnetisches Feld erzeugen, da achsial polarisierte Magnete im Vergleich zu radial polarisierten Permanentmagnete mit höherer Magnetfeldstärke angeboten werden.

Besonders vorteilhaft ist es, wenn die achsiale Abmessung der Spule des Elektromagneten größer als die des Permanentmagneten ist. Dann nämlich besitzt der hinter der Spule des Elektromagneten vorbeiführende Kurzschlußpfad im Fluß des Permanentmagneten einen höheren Widerstand als der direkt über den Anker des von der Haltevorrichtung angezogenen Teils führende Fluß und die Haltekraft des Permanentmagneten wirkt auch nach dem Abschalten des Elektromagneten ungeschwächt auf das gehaltene Teil.

Weitere Vorteile der Erfindung ergeben sich aus der nachstehenden Beschreibung von Ausführungsbeispielen anhand der Figuren 1-5 der beigefügten Zeichnungen.
- Figur 1: Ist ein Schnitt durch den auslenkbaren Teil eines Tastkopfes für Koordinatenmeßgeräte mit eingebauter elektromagnetischer Haltevorrichtung gemäß dem Stand der Technik;
- Figur 2a: ist ein Schnitt durch den auslenkbaren Teil eines Tastkopfes für Koordinatenmeßgeräte mit eingebauter elektromagnetischer Haltevorrichtung gemäß der Erfindung;
- Figur 2b: zeigt den Tastkopf aus Figur 2a im Schnitt in einer zur Längsachse senkrechten Ebene entlang der Linie IIb-IIb in Figur 2a;
- Figur 3a-3d: sind vereinfachte Prinzipskizzen, die die Wirkungsweise der Haltevorrichtung nach dem Stand der Technik aus Figur 1 in verschiedenen Stadien während des Betriebs erläutern;
- Figur 4a-4d: sind vereinfachte Prinzipskizzen, die die wirkungsweise der Haltevorrichtung gemäß der Erfindung aus Figur 2 in verschiedenen Stadien während des Betriebs erläutern;
- Figur 5a und 5b: sind eine Ansicht bzw. ein Schnitt einer alternativen Ausführungsform der elektromagnetischen Haltevorrichtung nach Figur 2 bzw. 4.

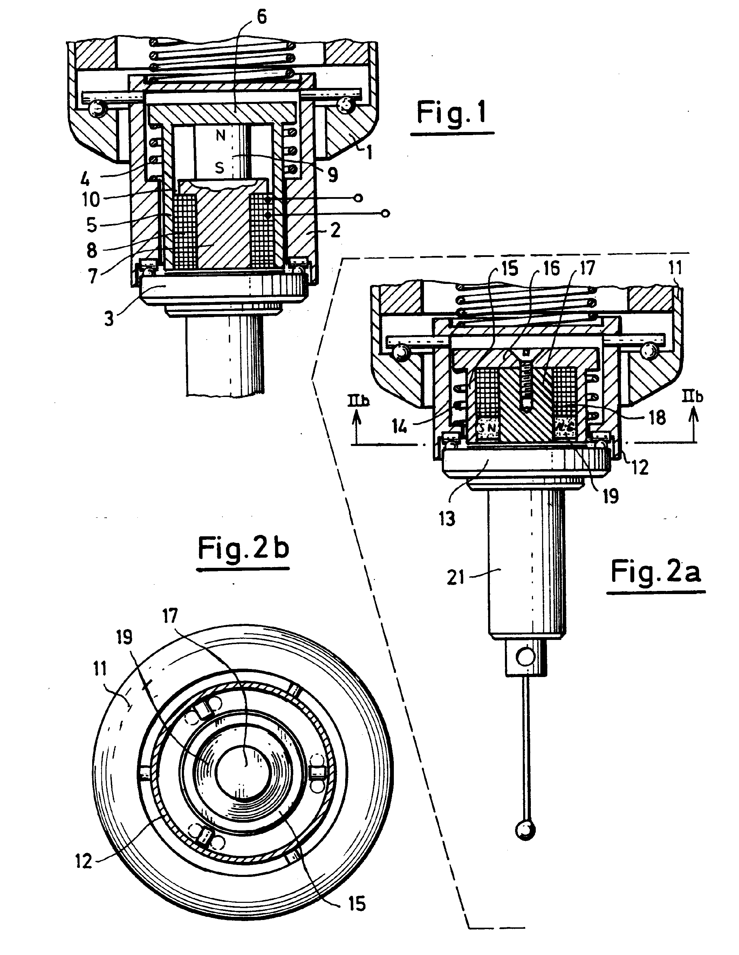

In Figur 1 ist mit (1) der gehäusefeste Teil eines Tastkopfes für Koordinatenmeßgeräte bezeichnet. Es handelt sich hierbei um einen Tastkopf vom schaltenden Typ, dessen auslenkbares, den Taststift tragendes Teil (2) von einer Feder in ein seine Nullage bestimmendes Dreipunktlager gedrückt wird. Tastköpfe diesen Typs sind beispielsweise in der US-PS 41 77 568 beschrieben.

In den auslenkbaren Teil (2) des Tastkopfes ist eine elektromagnetische Haltevorrichtung bestehend aus einem Elektromagneten und einem Permanentmagneten (9) sowie einem topfartigen Flußführungsteil (5) aus Weicheisen eingebaut. Der Elektromagnet besitzt einen ebenfalls weichmagnetischen Kern (7), der auf der Seite, die der Wechselfläche entgegengesetzt ist, in eine Scheibe mit größerem Durchmesser übergeht. Zwischen der Außenkante dieser Scheibe und der Innenseite des äußeren Flußführungsteils (5) befindet sich ein Spalt (10), der als Kurzschlußpfad für den Magnetfluß der Spule (8) des Elektromagneten dient. Der Permanentmagnet (9) ist ein achsial polarisierter Magnet und zentrisch zwischen dem Eisenkern (7) der Spule (8) und dem Boden (6) des topfartigen Flußführungsteils (5) angeordnet. Er ist im Durchmesser bedeutend kleiner als der Innendurchmesser des Flußführungsteils (5), um magnetische Kurzschlüsse zu vermeiden.

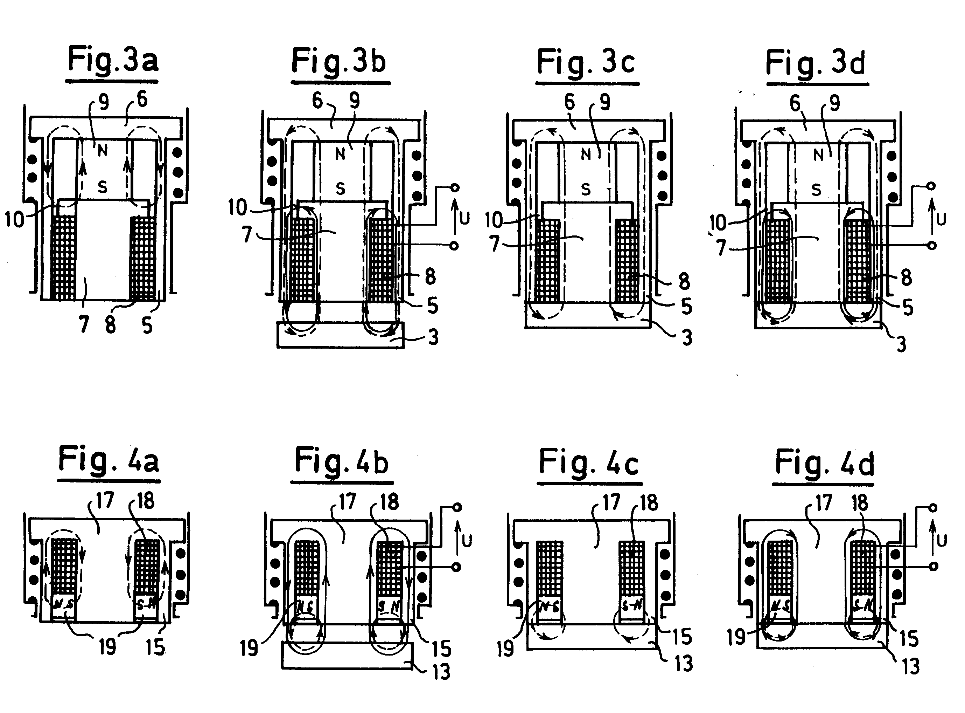

Die elektromagnetische Haltevorrichtung ist achsial gegen die Kraft einer Feder (4) verschiebbar in das auslenkbare Teil (2) des Tastkopfes eingebaut. Im gezeigten Zustand zieht die Haltevorrichtung den Wechselteller (3) eines Taststiftes gegen ein Dreipunktlager an der Unterseite des Teils (2). Die Wirkungsweise dieser Haltevorrichtung nach dem Stand der Technik wird anhand von Figur 3a-3d erläutert:

Im Ausgangszustand nach Figur 3a, wenn kein Taststift eingewechselt ist, verläuft der magnetische Fluß des Permanentmagneten (9) im Boden (6) des Flußführungsteils (5) und über den schmalen Spalt (10) in den Eisenkern (7) der Spule (8).

Soll wie in Figur 3b dargestellt ein von dem Tastkopf angefahrener, vor der Haltevorrichtung plazierter Wechselteller (3) angezogen werden, wird der Elektromagnet erregt. Der durch den durchgezogenen Pfeil repräsentierte magnetische Fluß des Elektromagneten verläuft ebenfalls über den als Kurzschlußpfad wirkenden Spalt (10) zwischen dem Flußführungsteil (5) und dem Eisenkern (7) ist dort jedoch dem Fluß des Permanentmagneten (9) entgegengerichtet. An der Wechselfläche, im Bereich des weichmagnetischen Ankers im Wechselteller (3) des Taststiftträgers addieren sich jedoch die dort gleichgerichteten Feldstärken des Permanentmagneten und des Elektromagneten und ziehen den Anker im Wechselteller (3) an.

Nach dem Abschalten des Elektromagneten (8) wird der Anker bzw. Wechselteller (3) allein durch die Kraft des Permanentmagneten (9) gehalten. Dessen Fluß verläuft nun über das Flußführungsteil (5, 6) sowie den Eisenkern (7) und den angelegten Anker im Wechselteller (3).

Zum Abwerfen des Taststiftes wird der Elektromagnet durch eine im Vergleich zur Figur 3b umgepolte Spannung U erregt. Hierbei neutralisieren sich die nun entgegengesetzten magnetischen Flüsse der Spule (8) und des Permanentmagneten (9) im Bereich des Ankers (3) gegenseitig, so daß der Taststifträger unter seinem Eigengewicht von der Haltevorrichtung abfällt.

Eine in der beschriebenen Weise nach dem Stand der Technik aufgebaute Haltevorrichtung besitzt etwa ein Gewicht von 280 g und Abmessungen von 35 mm Durchmesser und 48 mm Länge, um ein Tastergewicht von ca. 600 g einzuwechseln und mit einer Haltekraft von 200 N sicher zu halten. Während des Ein- und Auswechselvorganges setzt die Spule jeweils außerdem relativ viel elektrische Energie in störende Verlustwärme um.

Dies ist bei der in Figur 2 dargestellten Haltevorrichtung gemäß der Erfindung nur in vermindertem Umfange der Fall. Dort besteht die in das auslenkbare Teil (12) des Tastkopfes (11) eingebaute, und ebenfalls gegen die Kraft einer Feder (14) achsial verschiebbare Haltevorrichtung aus einem Elektromagneten und einem ringförmigen, von der Wechselfläche her gesehen vor dem Elektromagneten angeordneten Permanentmagneten (19), dessen Magnetfeld radial polarisiert ist. Der Eisenkern (17) der Spule (18) des Elektromagneten ist direkt ohne einen Spalt an den Boden (16) des topfartigen Flußführungsteils (15) angeschraubt und genauso lang, wie das Teil (15) tief ist. Die Spule (18) des Elektromagneten und der Permanentmagnet (19) sind beide in den zwischen dem Teil (15) und dem Eisenkern (17) bestehenden Ringspalt eingesetzt und füllen diesen voll aus. Durch diese Anordnung wird nicht nur unnötiger umbauter Raum vermieden. Wie nachstehend noch anhand von Figur 4a-d erläutert wird, können auch die Spule selbst und der Elektromagnet in ihren Abmessungen verkleinert werden und zwar ohne Einbuße an die Haltekraft.

Wenn der Wechselteller (13) mit dem Taststift (21) entfernt ist, verläuft der magnetische Fluß des Permanentmagneten (19) wie in Figur 4a gestrichelt dargestellt in den weichmagnetischen Flußführungsteilen (15-17) um die Spule (18) herum. Wird dann der Tastkopf (11) mit seiner Wechselfläche gegenüber dem Anker des Wechseltellers (13) positioniert und der Elektromagnet eingeschaltet (Figur 4b), dann verdrängt der durch den durchgezogenen Pfeil repräsentierte Fluß des Elektromagneten im Bereich der Weicheisenteile (15-17) den dort entgegengerichteten Fluß des Permanentmagneten (19), überlagert sich diesem jedoch gleichsinnig im Bereich des Wechseltellers (13) und zieht damit dessen Anker an.

Nach dem Abschalten des Elektromagneten (Figur 4c) ist der Fluß des Permanentmagneten (19) über den Anker im Wechselteller (13) geschlossen und nimmt nicht den längeren Weg um die in ihren Abmessungen im Vergleich zum Permanentmagneten (19) relativ lange Spule (18) des Elektromagneten herum.

Zum Abwerfen des Wechseltellers (13) wird die Spule (18) des Elektromagneten mit im Vergleich zum Einwechselvorgang nach Figur 4b entgegengesetzter Spannung beaufschlagt (siehe Figur 4d), so daß der Fluß des Elektromagneten den des Permanentmagneten (19) im Bereich des Wechseltellers (13) neutralisiert. Der hierzu für den Elektromagneten benötigte Strom kann relativ klein sein, da der von den Flußführungsteilen (15-17) und dem weichmagnetischen Anker gebildete Kreis, in dem die Feldlinien des Elektromagneten verlaufen, vollständig geschlossen ist. Entsprechend wird für einen Wechselvorgang nur etwa halb so viel elektrische Energie benötigt und in Verlustwärme umgesetzt. Die Spule (18) und der Permanentmagnet (19) können kleiner und leichter gehalten werden. Eine nach Figur 2 bzw. Figur 4 aufgebaute elektromagnetische Haltevorrichtung besitzt verglichen mit der nach Figur 1 bzw. 3 bei gleicher Haltekraft nur ein Gewicht von ca. 130 g und Abmessungen von 35 mm Durchmesser mal 20 mm Länge.

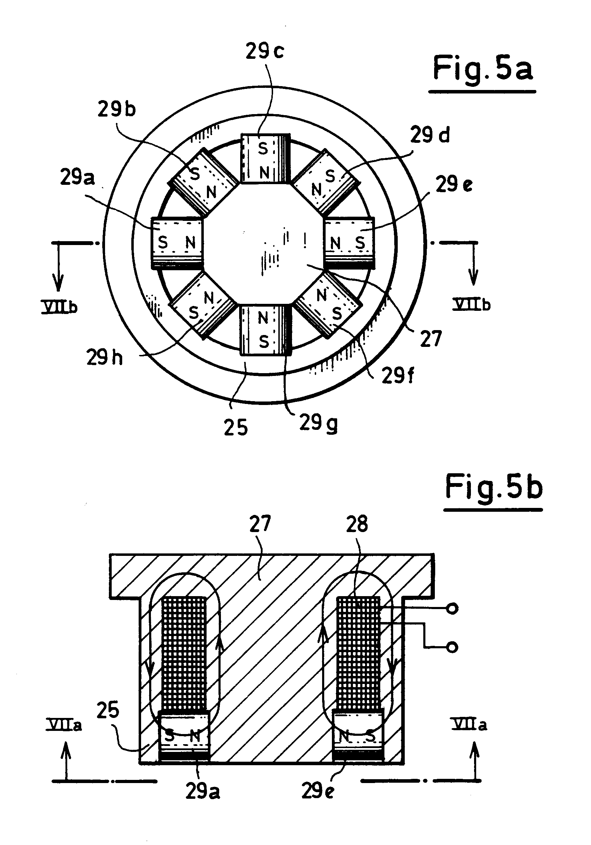

In Figur 5a und 5b ist ein alternatives Ausführungsbeispiel für die Haltevorrichtung nach Figur 2 dargestellt. Hier sind in den Ringspalt des weichmagnetischen Flußführungsteil (25/27) vor der Spule (28) des Elektromagneten anstelle eines einstückigen, ringförmigen Permanentmagneten acht einzelne Permanentmagnete (29a-h) eingesetzt. Bei den Permanentmagneten handelt es sich um zylindrische, achsial polarisierte Magnete, die symmetrisch um die Achse der Spule bzw. des Flußführungsteils herum mit ihren Magnetpolen radial ausgerichtet in den Ringspalt eingebaut sind. An den Stellen, an denen die Magnete (29a-h) in den Ringspalt eingelassen sind, ist die Außenseite des Weicheisenkerns (27) und die Innenseite des Flußführungsteils (25) mit acht ebenen Facetten versehen, so daß die einzelnen Magnete dort mit ihren Stirnseiten flächig anliegen.

Zwar entsteht durch diese Anordnung zwischen den Einzelmagneten in geringem Umfange wieder "toter" umbauter Raum, dies wird jedoch durch die höhere Feldstärke aufgewogen, die sich mit achsial polarisierten Einzelmagneten verglichen mit einem radial polarisierten, ringförmigen Magneten erzielen lassen. Außerdem läßt sich dieser Raum durch eine entsprechende Formgebung und eine größere Anzahl von Einzelmagneten stark reduzieren.

## Patentansprüche

1. Haltevorrichtung für Wechselteile wie beispielsweise Werkzeuge oder Meßtaster, mit einem oder mehreren Permanentmagneten und einem Elektromagneten (18; 28), dessen Feld dem des Permanentmagneten während des Wechselvorgangs überlagerbar ist, wobei der Elektromagnet (18; 28) und der Permanentmagnet im Ringspalt eines Flußführungsteils (15-17) angeordnet sind und die Pole der bzw. des Permanentmagnete(n) in Bezug auf die Magnetfeldachse des Elektromagneten (18; 28) im wesentlichen radial gerichtet ist, dadurch gekennzeichnet, daß das Flußführungsteil (15-17) mit angesetztem Wechselteil (13) in Bezug auf die Feldlinien des Elektromagneten (18; 28) vollständig geschlossen ist und der Elektromagnet (18; 28) während des Einwechselvorganges erregt ist.

2. Haltevorrichtung nach Anspruch 1, dadurch gekennzeichnet, daß ein einstückiger, ringförmiger Permanentmagnet (19) mit radialer Polarisation seines Magnetfeldes in den Ringspalt des Flußführungsteils (15-17) eingesetzt ist.

3. Haltevorrichtung nach Anspruch 1, dadurch gekennzeichnet, daß mehrere, achsial polarisierte Einzelmagnete (29a-h) in radialer Ausrichtung in den Ringspalt des Flußführungsteils (25-27) eingesetzt sind.

4. Haltevorrichtung nach Anspruch 1, dadurch gekennzeichnet, daß die achsiale Abmessung der Spule (18) des Elektromagneten größer als die des Permanentmagneten (19) ist.

5. Haltevorrichtung nach Anspruch 1, dadurch gekennzeichnet, daß am Wechselteil (13) ein Taststift (20) oder der Tastkopf eines Koordinatenmeßgerätes befestigt ist.

6. Haltevorrichtung nach Anspruch 1, dadurch gekennzeichnet, daß die Haltevorrichtung (15-19) in den auslenkbaren Teil (2) des Tastkopfs (1) eines Koordinatenmeßgerätes eingebaut ist.

7. Tastkopf für Koordinatenmeßgeräte, dessen auslenkbarer, den auswechselbaren Taststift tragender Teil eine gegen Federkraft achsial bewegliche, elektromagnetische Spannvorrichtung bestehend aus einem Permanentmagneten (19, 29) und einem Elektromagneten (18, 28) enthält, dessen Feld dem des Permanentmagneten während des Einwechselvorganges gleichsinnig und während des Auswechselvorganges gegensinnig überlagert ist, dadurch gekennzeichnet, daß der Permanentmagnet (19; 29) und die Spule (18; 28) des Elektromagneten in den Ringspalt eines Flußführungsteils (15-17; 25-27) eingesetzt sind, wobei der Permanentmagnet mit radialer Ausrichtung seiner Magnetpole in Bezug auf die Achse der Spule bzw. des Flußführungsteils auf der Seite der Wechselfläche vor dem Elektromagneten angeordnet ist, wobei das Flußführungsteil (15-17; 25-27) mit einem angesetzten Wechselteil (13) in Bezug auf die Feldlinien des Elektromagneten (18, 28) vollständig geschlossen ist.

8. Tastkopf nach Anspruch 7, dadurch gekennzeichnet, daß die achsiale Abmessung der Spule (18; 28) des Elektromagneten größer als die des Permanentmagneten (19; 29) ist.

9. Tastkopf nach Anspruch 7, dadurch gekennzeichnet, daß mehrere, achsial polarisierte Einzelmagnete (29a-h) mit radialer Ausrichtung ihre Magnetpole in den Ringspalt des Flußführungsteils (25-27) eingesetzt sind.

10. Tastkopf nach Anspruch 7, dadurch gekennzeichnet, daß das Flußführungsteil in dem Bereich, in dem der magnetische Fluß des Elektromagneten verläuft, bei eingewechseltem Taststift (20) vollständig geschlossen ist.

## Revendications

1. Dispositif de retenue pour des pièces interchangeables comme par exemple des outils ou des palpeurs de mesure, comportant un ou plusieurs aimants permanents et un électroaimant (18;28), dont le champ peut être superposé à celui de l'aimant permanent pendant l'opération de changement, et dans lequel l'électroaimant (18;28) et l'aimant permanent sont disposés dans la fente annulaire d'une partie (15-17) de guidage du flux et les pôles du ou des aimants permanents sont dirigés sensiblement radialement par rapport à l'axe du champ magnétique de l'électroaimant (18;28), caractérisé en ce que la partie (15-17) de guidage du flux, sur laquelle est disposée une partie interchangeable (13), est complètement fermée par rapport aux lignes de champ de l'électroaimant (18;28), et l'électroaimant (18;28) est excité pendant l'opération de changement.

2. Dispositif de retenue selon la revendication 1, caractérisé en ce qu'un aimant permanent annulaire monobloc (19), dont le champ magnétique possède une polarisation radiale, est inséré dans la fente annulaire de la partie (15-17) de guidage du flux.

3. Dispositif de retenue selon la revendication 1, caractérisé en ce que plusieurs aimants individuels (29a-h) à polarisation axiale sont insérés avec une orientation radiale dans la fente annulaire de la partie (25-27) de guidage du flux.

4. Dispositif de retenue selon la revendication 1, caractérisé en ce que la dimension axiale de la bobine (18) de l'électroaimant est supérieure à celle de l'aimant permanent (19).

5. Dispositif de retenue selon la revendication 1, caractérisé en ce qu'une tige de palpage (20) ou la tête de palpage d'un appareil de mesure à coordonnées est fixée à la partie interchangeable (13).

6. Dispositif de retenue selon la revendication 1, caractérisé en ce que le dispositif de retenue (15-19) est monté dans la partie orientable (2) de la tête de palpage (1) d'un appareil de mesure à coordonnées.

7. Tête de palpage pour appareil de mesure à coordonnées, dont la partie orientable, qui porte la tige de palpage interchangeable, contient un dispositif électromagnétique de serrage, qui est mobile axialement à l'encontre de la force d'un ressort et est constitué par un aimant permanent (19,29) et par un électroaimant (18,28), dont le champ est superposé avec le même sens au champ de l'aimant permanent pendant l'opération de changement avec insertion et est superposé avec le sens opposé pendant le processus de retrait lors du changement, caractérisée en ce que l'aimant permanent (19;29) et la bobine (18;28) de l'électroaimant sont insérés dans la fente annulaire d'une partie (15-17; 25-27) de guidage du flux, l'aimant permanent étant disposé de telle sorte que ses pôles magnétiques sont alignés radialement par rapport à l'axe de la bobine ou de la partie de guidage du flux, sur le côté de la surface de changement, en avant de l'électroaimant, la partie (15-17; 25-27) de guidage du flux, sur lequel est montée une partie interchangeable (13), étant complètement fermée par rapport aux lignes de champ de l'électroaimant (18;28).

8. Tête de palpage selon la revendication 7, caractérisée en ce que la dimension axiale de la bobine (18;28) de l'électroaimant est supérieure à celle de l'aimant permanent (19;29).

9. Tête de palpage selon la revendication 7, caractérisée en ce que plusieurs éléments individuels (29a-h) à polarisation axiale sont insérés, avec un alignement radial de leurs pôles magnétiques, dans la fente annulaire de la partie (25-27) de guidage du flux.

10. Tête de palpage selon la revendication 7, caractérisée en ce que la partie de guidage du flux est complètement fermée dans la zone, dans laquelle s'étend le flux magnétique de l'électroaimant, lors de la mise en place de la tige de palpage (20) lors de son remplacement.

## Claims

1. A holding device for interchangeably holding task units like tools or measuring probes for example, comprising one or more permanent magnets and an electromagnet (18; 28) having a magnetic field which can be superposed to the field of the permanent magnet during exchange, the electromagnet (18; 28) and the permanent magnet both being seated in the ring gap of a flux-conducting part (15 - 17) and the magnetic poles of the permanent magnet(s) being oriented substantially in a radial direction with respect to the magnet field axis of the electromagnet (18; 28), characterised by the fact that the flux-conducting-part (15 - 17) defines a completely closed circuit with respect to the magnetic field of the electromagnet (18; 28), when the interchangeable task unit is held in position, and that the electromagnet (18; 28) is exited during the exchange process.

2. The holding device of claim 1, characterized by the fact that a single-piece ring-shaped permanent magnet (19) having a radially polarized magnetic field is seated in the annular gap of the flux conducting part (15 - 17).

3. The holding device of claim 1, characterized by the fact that a plurality of axially polarized individual magnets (29a - h) are seated in the annular gap of the flux conducting part (25 -27) in radial orientation.

4. The holding device of claim 1, characterized by the fact that the axial dimension of the spool (18) of said electromagnet (15) is greater than the axial dimension of said permanent magnet (19).

5. The holding device of claim 1, characterized by the fact that a probe pin (20) or the probe head of a coordinate measuring apparatus is fastened to said interchangeable task unit (13).

6. The holding device of claim 1, characterized by the fact that the holding device (15 - 19) is built into the displaceable part (2) of the probe head (1) of a coordinate measuring apparatus.

7. A probe head for coordinate measuring apparatus, the probe head having a displaceable part carrying the interchangeable probe pin, which part comprises an electromagnetic armature being axially moveable against spring force and consisting of a permanent magnet (19, 29) and an electromagnet (18, 28), the field of which electromagnet can be superposed to the field of the permanent magnet during the clamping process with same sign and during the declamping process with opposite sign, characterized by the fact, that the permanent magnet (19; 29) and the spool (18; 28) of the electromagnet are seated in the ring gap of a flux conducting part (15 - 17; 25 - 27) such that the permanent magnet is arranged in front of the electromagnet adjacend to the exchange flat with a radial orientation of its magnetic poles, and such that the flux conducting part (15 - 17; 25 - 27) defines a completely closed magnetic circuit with respect to the field lines of the electromagnet (18, 28), when the exchange part (13) is clamped.

8. The probe head of claim 7, characterized by the fact that the axial dimension of the spool (18, 28) of said electromagnet is greater than the axial dimension of said permanent magnet (19; 29).

9. The probe head of claim 7, characterized by the fact, that a plurality of axially polarized individual magnets (29a - h) are seated in the annular gap of the flux conducting part (25 - 27).

10. The probe head of claim 7, characterized by the fact, that said flux-conducting part defines a completely closed magnetic circuit in the area of the magnetic flux of the electromagnet, when said probe pin (20) is clamped.
